# EUROPÄISCHE PATENTSCHRIFT

(11) **EP 3 094 869 B1**
(45) Veröffentlichungstag und Bekanntmachung des Hinweises auf die Patenterteilung: **11.09.2019**
(21) Anmeldenummer: 14816180.5
(22) Anmeldetag: 10.12.2014
(51) Int. Cl.: F16B 21/07, F16B 5/06

(54) **BAUTEILVERBINDUNG SOWIE VERFAHREN ZUM VERBINDEN ZWEIER BAUTEILE**
COMPONENT CONNECTION AND METHOD FOR CONNECTING TWO COMPONENTS
ASSEMBLAGE DE COMPOSANTS ET PROCÉDÉ D'ASSEMBLAGE DE DEUX COMPOSANTS

(30) Priorität: 13.01.2014 DE 102014200391
(43) Veröffentlichungstag der Anmeldung: 23.11.2016
(73) Patentinhaber: Bayerische Motoren Werke Aktiengesellschaft, 80809 München (DE)
(72) Erfinder: HAMMER, Maik, 84174 Eching (DE); NIEKERK, Johann, 80993 München (DE)
(86) Internationale Anmeldenummer: PCT/EP2014/077267
(87) Internationale Veröffentlichungsnummer: WO 2015/104124

(56) Entgegenhaltungen:
- WO-A2-2012/084090
- DE-A1-102010 040 547
- DE-B3-102012 206 938
- GB-A- 2 470 179

## Beschreibung

Die vorliegende Erfindung betrifft eine Bauteilverbindung gemäß dem Oberbegriff des Patentanspruches 1 sowie ein Verfahren gemäß den Merkmalen des Patentanspruches 18.

Eine Bauteilverbindung, bei der ein Verbindungselement verwendet wird, das zwei oder mehrere miteinander verbundene kugelige oder kugelähnliche Elemente aufweist, ist aus der DE 10 2012 206 938 B3 bekannt. Zum technischen Hintergrund der vorliegenden Erfindung zählen die DE 10 2010 040 547 A1, WO 2012/084090 A2 sowie die GB 2470179 A.

Aufgabe der Erfindung ist es, ein Verfahren anzugeben, mittels dem zwei jeweils ein Durchgangsloch aufweisende Bauteile in einfacher Weise mit zunächst "schwimmend" miteinander verbunden werden können, sowie eine entsprechende Bauteilverbindung anzugeben.

Ausgangspunkt der Erfindung ist eine Bauteilverbindung zur Verbindung eines ersten Bauteils mit einem zweiten Bauteil. Das erste Bauteil weist ein Durchgangsloch auf, von dessen "Lochrand" zu einer ersten Seite des ersten Bauteils hin mindestens ein Klemmelement absteht. Das mindestens eine Klemmelement kann durch einen umgebogenen oder aufgebogenen Randabschnitt des Lochrands des ersten Bauteils gebildet sein. Das mindestens eine Klemmelement kann z.B. durch einen umlaufenden Klemmkragen oder durch mehrere in Umfangsrichtung verteilt angeordnete und voneinander beabstandete Klemmkragenabschnitte gebildet sein.

Das zweite Bauteil weist ebenfalls ein Durchgangsloch auf, von dessen "Lochrand" zu einer der ersten Seite des zweiten Bauteils hin mindestens ein Klemmelement absteht. Das mindestens eine Klemmelement des zweiten Bauteils kann ebenfalls durch einen umgebogenen oder aufgebogenen Randabschnitt des Lochrands gebildet sein. Auch hier kann das mindestens eine Klemmelement durch einen umlaufenden Klemmkragen oder durch mehrere in Umfangsrichtung voneinander beabstandete Klemmkragenabschnitte gebildet sein.

Gemäß der Erfindung werden die beiden Bauteile so aneinander gefügt, dass sie mit ihren den ersten Seiten abgewandten zweiten Seiten aneinander anliegen. "Anliegen" kann bedeuten, dass sie unmittelbar aneinander anliegen, d.h. dass sie einander unmittelbar berühren. Dies muss aber nicht zwingend der Fall sein. Prinzipiell könnte zwischen den zweiten Seiten der beiden Bauteile auch eine Zwischenschicht, z.B. eine Klebstoffschicht, eine durch ein drittes Bauteil gebildete Schicht o.ä. vorgesehen sein.

Ein wesentliches Element der Erfindung ist durch ein Verbindungselement gebildet. Das Verbindungselement weist mindestens zwei kugelige oder kugelähnliche Elemente auf. Das Verbindungselement erstreckt sich durch die beiden Durchgangslöcher hindurch und zwar derart, dass das mindestens eine Klemmelement des ersten Bauteils von außen her an einem ersten der mindestens zwei kugeligen oder kugelähnlichen Elemente klemmend anliegt und das mindestens eine Klemmelement des zweiten Bauteils an einem zweiten der mindestens zwei kugeligen oder kugelähnlichen Elemente klemmend anliegt.

Mittels eines derartigen Verbindungselements können die beiden Bauteile in einfacher Weise "schwimmend" zusammengeklemmt werden. "Schwimmend" bedeutet, dass die beiden aneinander geklemmten Bauteile zumindest in gewissem Umfang nach dem Zusammenklemmen relativ zueinander verschoben werden können. Eine derart schwimmende Vorfixierung zweier Bauteile eröffnet eine Vielzahl von Anwendungsmöglichkeiten. Eine derartige Bauteilverbindung kann z.B. zum Vorfixieren zweier fest miteinander zu verbindender Karosseriebauteile eines Fahrzeugs, zum Vorfixieren eines Anbauteils an einem Karosseriebauteil eines Fahrzeugs o.ä. verwendet werden.

Es kann vorgesehen sein, dass das Verbindungselement genau zwei miteinander verbundene kugelige oder kugelähnliche Elemente aufweist. Insbesondere kann vorgesehen sein, dass das Verbindungselement durch genau zwei miteinander verbundene Kugeln gebildet ist. Die beiden kugeligen oder kugelähnlichen Elemente oder Kugeln können insbesondere stoffschlüssig miteinander verbunden sein, z.B. durch Verschweißen.

Nach einer Weiterbildung der Erfindung ist vorgesehen, dass mindestens eines der Klemmelemente, insbesondere jedes Klemmelement des ersten und/oder des zweiten Bauteils in einem Bereich von außen her an dem Verbindungselement anliegt, deren Bereich zwischen "Äquatorebenen" der kugeligen oder kugelähnlichen Elemente liegt. Stellt man sich eine Verbindungslinie durch die Mittelpunkte der kugeligen oder kugelähnlichen Elemente vor, so stehen die Äquatorebenen der kugeligen oder kugelähnlichen Elemente senkrecht zu dieser Verbindungslinie. Wenn die Klemmelemente von außen her im Bereich zwischen den Äquatorebenen an den kugeligen oder kugelähnlichen Elementen anliegen, ergibt sich eine besonders hohe Klemm- bzw. Abziehkraft.

Wie oben bereits angedeutet, muss eine durch die Mittelpunkte der kugeligen oder kugelähnlichen Elemente verlaufende Gerade nicht exakt lotrecht in Bezug auf eine Tangentialebene des ersten und/oder des zweiten Bauteils im Bereich des zugeordneten Durchgangslochs sein, d. h. nicht exakt lotrecht zu den beiden Bauteilen im Bereich der Durchgangslöcher. Die durch die Mittelpunkte der kugeligen oder kugelähnlichen Elemente verlaufende Gerade kann vielmehr auch schräg in Bezug hierzu sein. Durch eine derart "schwimmende Lagerung" können in gewissem Umfang also Fertigungstoleranzen kompensiert werden.

Wie bereits angedeutet, kann vorgesehen sein, dass das mindestens eine Klemmelement des ersten Bauteils und/oder das mindestens eine Klemmelement des zweiten Bauteils einstückig mit dem ersten oder dem zweiten Bauteil verbunden ist. Das mindestens eine Klemmelement des ersten Bauteils und/oder des zweiten Bauteils kann z.B. durch einen umgebogenen Lochrand des ersten oder zweiten Bauteils gebildet sein.

Zusätzlich zu der Klemmverbindung können die beiden Bauteile dauerhaft fest oder in anderer Weise fest miteinander verbunden sein. Nach einem Vorfixieren der beiden Bauteile über das Verbindungselement können die beiden Bauteile bspw. miteinander verschweißt, verschraubt, vernietet, verklebt oder in anderer Weise fest miteinander verbunden sein.

Insbesondere kann vorgesehen sein, dass zusätzlich zu der Klemmverbindung die beiden Bauteile durch eine formschlüssige Verbindung in Bezug zueinander ausgerichtet sind. Beispielsweise kann das erste Bauteil eine Erhebung und das zweite Bauteil eine dazu komplementäre Vertiefung aufweisen, in welche die Erhebung formschlüssig eingreift, oder umgekehrt.

Alternativ oder ergänzend dazu können in den beiden Bauteilen auch Zentrierlöcher vorgesehen sein, in die ein Zentrierelement, z.B. ein Zentrierstift eingefügt wird, der die beiden Bauteile zumindest an der Stelle der Zentrierlöcher eindeutig relativ zueinander positioniert.

Ferner kann vorgesehen sein, dass das Klemmelement des ersten Bauteils mit dem ersten kugeligen Element verschweißt wird und/oder das Klemmelement des zweiten Bauteils mit dem zweiten kugeligen Element verschweißt wird.

Sofern eines der Klemmelemente durch einen umlaufenden Klemmkragen gebildet ist, kann der umlaufende Klemmkragen umlaufend mit dem zugeordneten kugeligen oder kugelähnlichen Element verschweißt werden.

Vollständigkeitshalber sei auch noch das erfindungsgemäße Verfahren beschrieben. Konkret geht es um ein Verfahren zum Verbinden eines ersten, ein Durchgangsloch aufweisenden Bauteils, mit einem zweiten, ein Durchgangsloch aufweisenden Bauteil mit folgenden Schritten:
- Aneinanderlegen der beiden Bauteile, derart, dass die Durchgangslöcher einander zumindest teilweise überlappen;
- Klemmverbinden der beiden Bauteile durch Anbringen eines Verbindungselements, welches mindestens zwei kugelige oder kugelähnliche Elemente aufweist, derart, dass ein erstes der kugeligen oder kugelähnlichen Elemente auf einer ersten Seite des ersten Bauteils aus dem Durchgangsloch des ersten Bauteils herausragt und ein zweites der kugeligen oder kugelähnlichen Elemente auf eines der ersten Seite des ersten Bauteils abgewandten ersten Seite des zweiten Bauteils aus dem Durchgangsloch des zweiten Bauteils herausragt. Von einem Lochrand des ersten Bauteils steht ein Klemmelement ab, das klemmend von außen her an dem ersten kugeligen oder kugelähnlichen Elemente anliegt. Von einem Lochrand des zweiten Bauteils steht ein Klemmelement ab, das klemmend von außen her an dem zweiten der kugeligen oder kugelähnlichen Elemente anliegt.

Das Verschweißen eines Klemmelements mit einem daran anliegenden kugeligen oder kugelähnlichen Element kann z.B. durch Laser-Schweißen erfolgen, was den Vorteil hat, dass die Schweißvorrichtung beabstandet von der Bauteilverbindung angeordnet sein kann.

Versuche haben ergeben, dass ein kugeliges oder kugelähnliches Element, wie es ein Verbindungselement gemäß der Erfindung aufweist, sehr gut und präzise durch eine optische Detektionseinrichtung detektiert werden kann. Die kugeligen oder kugelähnlichen Elemente des Verbindungselements bilden somit aufgrund ihrer Gestalt ein hinsichtlich ihrer jeweiligen Position sehr präzise detektierbares Element. Die von einer entsprechenden Detektierungseinrichtung erzeugten Positionssignale können der Schweißeinrichtung (z.B. Laser-Schweißeinrichtung) zugeführt werden. Auf diese Weise können positionsgenau qualitativ hochwertige Schweißverbindungen hergestellt werden.

Im Folgenden wird die Erfindung im Zusammenhang mit der Zeichnung näher erläutert. Es zeigen:
- Fig. 1: Ein Ausführungsbeispiel gemäß der Erfindung, bei der das Verbindungselement lotrecht zu den beiden Bauteilen steht; und
- Fig. 2: ein Ausführungsbeispiel, bei dem das Verbindungselement schräg zu den beiden Bauteilen steht.

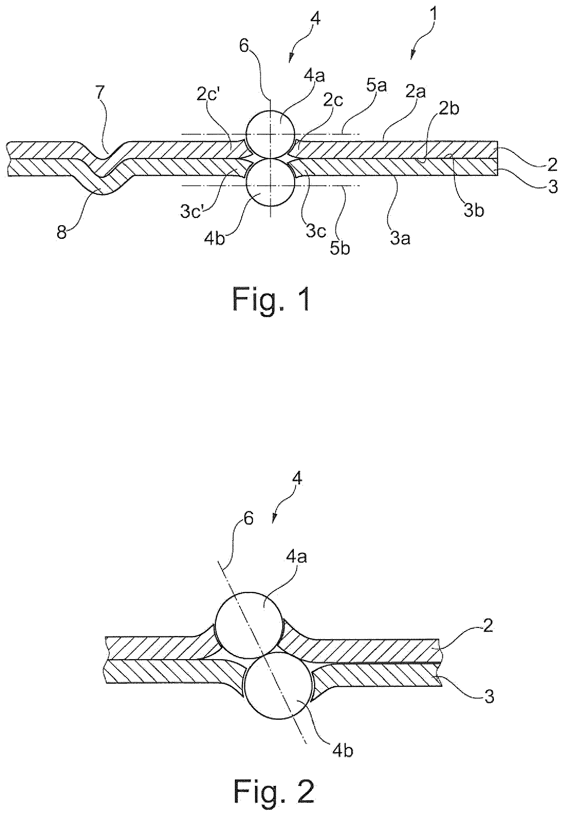

Fig. 1 zeigt eine Bauteilverbindung 1 bestehend aus einem ersten Bauteil 2 und einem zweiten Bauteil 3. Bei einem oder beiden Bauteilen 2 bzw. 3 kann es sich z.B. um ein Blech, ein Kunststoffbauteil, insbesondere ein faserverstärktes Kunststoffbauteil o.ä. handeln. Das erste Bauteil 2 weist eine Oberseite 2a, die im Folgenden auch als erste Seite bezeichnet wird und eine der ersten Seite abgewandte zweite Seite 2b auf.

Das zweite Bauteil 3 weist ebenfalls eine erste Seite 3a, welche hier eine Unterseite bildet, und eine der ersten Seite 3a abgewandte zweite Seite 3b auf. Die beiden zweiten Seiten 2b, 3b der beiden Bauteile 2, 3 liegen einander an. Die beiden ersten Seiten 2a, 3a der beiden Bauteile 2, 3 sind einander abgewandt.

Das erste Bauteil 2 weist ein Durchgangsloch auf, von dessen Lochrand zur ersten Seite 2a des ersten Bauteils 2 hin mindestens ein Klemmelement 2c absteht. Das Klemmelement 2c ist durch einen etwas nach oben aufgebogenen Randabschnitt des Lochrands gebildet. Beispielsweise kann vorgesehen sein, dass der gesamte Lochrand etwas nach oben aufgebogen ist. In diesem Fall handelt es sich bei dem Klemmelement um ein einziges Klemmelement, d.h. durch einen umlaufenden Klemmrand (Kragenloch).

Alternativ dazu können auch mehrere in Umfangsrichtung voneinander beabstandete Klemmelemente 2c, 2c' vorgesehen sein.

Das zweite Bauteil 3 weist ebenfalls ein Durchgangsloch auf, von dessen Lochrand zur ersten Seite 3a des zweiten Bauteils 3 hin mindestens ein Klemmelement 3c absteht. Auch hier kann ein umlaufender Klemmrand vorgesehen sein. Alternativ dazu können auch hier mehrere in Umfangsrichtung voneinander beabstandete etwas nach unten aufgebogene Klemmelemente 3c, 3c' vorgesehen sein.

Wie aus Fig. 1 ersichtlich ist, sind die beiden Bauteile 2, 3 so tief zueinander ausgerichtet, dass die beiden Durchgangslöcher einander zumindest teilweise überlappen. Bei der in Fig. 1 gezeigten Anordnung sind die beiden Durchgangslöcher sogar im Wesentlichen konzentrisch relativ zueinander ausgerichtet. Durch die beiden Durchgangslöcher hindurch erstreckt sich ein Verbindungselement 4. Das Verbindungselement 4 weist ein erstes kugeliges Element 4a und ein damit verbundenes zweites kugeliges Element 4b auf. Die beiden kugeligen Elemente 4a, 4b sind bei dem in Fig. 1 gezeigten Ausführungsbeispiel unmittelbar miteinander verbunden, d.h. sie liegen unmittelbar aneinander an. Dies muss aber nicht zwingend so sein. Das Verbindungselement könnte bspw. auch hantelartig gestaltet sein, d.h. zwischen den beiden kugeligen Elementen 4a, 4b könnte noch ein Verbindungsabschnitt vorgesehen sein.

Die beiden kugeligen Elemente 4a, 4b können z.B. miteinander verschweißt oder in anderer Weise stoffschlüssig miteinander verbunden sein. Die kugeligen Elemente 4a, 4b können insbesondere durch zwei aus Metall bestehende Kugeln, z.B. Stahlkugeln, Aluminiumkugeln o.ä. gebildet sein.

Wie aus Fig. 1 ersichtlich ist, ist das Verbindungselement 4 so angeordnet, dass die beiden kugeligen Elemente 4a, 4b zumindest etwas aus den Durchgangslöchern, die in den beiden Bauteilen 2, 3 vorgesehen sind, herausstehen. Durch gestrichelte Linien sind die Äquatorebenen 5a, 5b der beiden kugeligen Elemente angedeutet. Die Äquatorebenen 5a, 5b verlaufen durch Mittelpunkte der beiden kugeligen Elemente 4a, 4b und stehen senkrecht zu einer die beiden Mittelpunkte verbindenden Geraden 6. Die Gerade 6 verläuft hier in etwa oder exakt durch die Mittelpunkte der in den beiden Bauteilen 2, 3 vorgesehenen Durchgangslöcher. Dementsprechend steht das Verbindungselement 4 in Fig. 1 lotrecht zu den hier im Wesentlichen ebenen Bauteilen 2, 3.

Wie aus Fig. 1 ersichtlich ist, liegen die Klemmelemente 2c, 2c' des ersten Bauteils 2 und die Klemmelemente 3c, 3c' des zweiten Bauteils 3 in einem Bereich zwischen den beiden Äquatorebenen 5a, 5b von außen her an dem jeweils zugeordneten kugeligen Element 4a bzw. 4b an, wodurch sich eine besonders hohe Klemm- bzw. Abziehkraft ergibt. Durch eine derartige Bauteilverbindung können die beiden Bauteile 2, 3 also bereits relativ fest aneinander vorfixiert bzw. relativ fest miteinander lösbar verbunden werden.

Wie aus Fig. 1 ersichtlich ist, weist das erste Bauteil 2 eine nasenartige Erhebung 7 und das zweite Bauteil 3 eine dazu im Wesentlichen komplementär gestaltete muldenartige Vertiefung 8 auf. Die Erhebung 7 greift formschlüssig in die Vertiefung 8 ein, wodurch die beiden Bauteile 2, 3 zusätzlich relativ zueinander positioniert sind.

Die in Fig. 1 gezeigte Bauteilverbindung ermöglicht eine "schwimmende Vorfixierung" der beiden Bauteile 2, 3, was aus Fig. 2 ersichtlich ist. Unter dem Begriff "schwimmende Vorfixierung" ist zu verstehen, dass die die beiden Mittelpunkte der kugeligen oder kugelähnlichen Elemente 4a, 4b verbindende Gerade 6 nicht notwendigerweise lotrecht relativ zu einer Tangentialebene des ersten und/oder des zweiten Bauteils im Bereich des zugeordneten Durchgangslochs sein muss, sondern, wie in Fig. 2 dargestellt, auch zumindest etwas schräg stehen können. Die über das Verbindungselement 4 miteinander verbundenen Bauteile 2, 3 können somit zumindest in gewissem Umfang noch relativ zueinander verschoben werden.

## Patentansprüche

1. Bauteilverbindung (1), mit
- einem ersten Bauteil (2), welches ein Durchgangsloch aufweist, von dessen Lochrand zu einer ersten Seite (2a) des ersten Bauteils (2) hin mindestens ein Klemmelement (2c, 2c') absteht,
- einem zweiten Bauteil (3) welches ein Durchgangsloch aufweist, von dessen Lochrand zu einer ersten Seite (3a) des zweiten Bauteils (3) hin mindestens ein Klemmelement (3c, 3c') absteht, wobei
- die beiden Bauteile (2, 3) mit ihren den ersten Seiten (2a, 3a) abgewandten Seiten (2b, 3b) aneinander anliegen und
- mit einem mindestens zwei kugelige oder kugelähnliche Elemente (4a, 4b) aufweisenden Verbindungselement (4), das sich durch die beiden Durchgangslöcher hindurch erstreckt, derart, dass
- das mindestens eine Klemmelement (2c, 2c') des ersten Bauteils (2) an einem ersten der mindestens zwei kugeligen oder kugelähnlichen Elemente (4a, 4b) anliegt und
- das mindestens eine Klemmelement (3c, 3c') des zweiten Bauteils (3) an einem zweiten der mindestens zwei kugeligen oder kugelähnlichen Elemente (4a, 4b) klemmend anliegt.

2. Bauteilverbindung nach Anspruch 1, **dadurch gekennzeichnet, dass** das Verbindungselement (4) genau zwei miteinander verbundene Kugeln (4a, 4b) aufweist oder durch genau zwei miteinander verbundene Kugeln (4a, 4b) gebildet ist.

3. Bauteilverbindung nach Anspruch 2, **dadurch gekennzeichnet, dass** die beiden Kugeln stoffschlüssig miteinander verbunden sind.

4. Bauteilverbindung nach einem der Ansprüche 2 oder 3, **dadurch gekennzeichnet, dass** die beiden Kugeln (4a, 4b) miteinander verschweißt sind.

5. Bauteilverbindung nach einem der Ansprüche 1 bis 4, **dadurch gekennzeichnet, dass** mindestens eines der Klemmelemente (2c, 2c', 3c, 3c'), insbesondere jedes Klemmelement (2c, 2c', 3c, 3c') des ersten und/oder des zweiten Bauteils (2, 3) in einem Bereich von außen her an dem Verbindungselement (4) anliegt, der im Bereich zwischen Äquatorebenen (5a, 5b) der kugeligen oder kugelähnlichen Elemente (4a, 4b) liegt.

6. Bauteilverbindung nach einem der Ansprüche 1 bis 5, **dadurch gekennzeichnet dass** eine durch Mittelpunkte der kugeligen oder kugelähnlichen Elemente verlaufende Gerade nicht exakt lotrecht, sondern schräg in Bezug auf eine Tangentialebene des ersten und/oder des zweiten Bauteils im Bereich des jeweiligen Durchgangslochs ist.

7. Bauteilverbindung nach einem der Ansprüche 1 bis 6, **dadurch gekennzeichnet, dass** das mindestens eine Klemmelement (2c, 2c') des ersten Bauteils (2) und/oder das mindestens eine Klemmelement (3c, 3c') des zweiten Bauteils (3) einstückig mit dem ersten oder dem zweiten Bauteil (2, 3) verbunden ist.

8. Bauteilverbindung nach einem der Ansprüche 1 bis 7, **dadurch gekennzeichnet, dass** das mindestens eine Klemmelement (2c, 2c') des ersten Bauteils (2) und/oder das mindestens eine Klemmelement (3c, 3c') des zweiten Bauteils durch einen umgebogenen oder aufgebogenen Lochrand des ersten Bauteils (2) oder des zweiten Bauteils (3) gebildet ist.

9. Bauteilverbindung nach einem der Ansprüche 1 bis 8, **dadurch gekennzeichnet, dass** die beiden Bauteile (2, 3) zusätzlich zu der Klemmverbindung dauerhaft fest miteinander verbunden sind.

10. Bauteilverbindung nach einem der Ansprüche 1 bis 9, **dadurch gekennzeichnet, dass** die beiden Bauteile (2, 3) verschweißt oder verschraubt oder vernietet oder verklebt sind.

11. Bauteilverbindung nach einem der Ansprüche 1 bis 10, **dadurch gekennzeichnet, dass** die beiden Bauteile (2, 3) zusätzlich zu der Klemmverbindung durch eine formschlüssige Verbindung (7, 8) in Bezug zueinander ausgerichtet sind.

12. Bauteilverbindung nach einem der Ansprüche 1 bis 11, **dadurch gekennzeichnet, dass** das erste Bauteil (2) eine Erhebung (7) und das zweite Bauteil eine Vertiefung aufweist, in welche die Erhebung formschlüssig eingreift, oder umgekehrt.

13. Bauteilverbindung nach einem der Ansprüche 1 bis 12, **dadurch gekennzeichnet, dass** die beiden Bauteile (2, 3) aneinander ausgerichtete Zentrierlöcher aufweisen, in die ein Zentrierelement, insbesondere ein Zentrierstift, eingeführt ist.

14. Bauteilverbindung nach einem der Ansprüche 1 bis 13, **dadurch gekennzeichnet, dass** das mindestens eine Klemmelement (2c, 2c') des ersten Bauteils (2) mit dem ersten kugeligen Element (4a) und/oder das mindestens eine Klemmelement (3c, 3c') des zweiten Bauteils (3) mit dem zweiten kugeligen Element (4b) verschweißt ist.

15. Bauteilverbindung nach einem der Ansprüche 1 bis 14, **dadurch gekennzeichnet, dass** das mindestens eine Klemmelement (2c, 2c') des ersten Bauteils (2) und/oder das mindestens eine Klemmelement (3c, 3c') des zweiten Bauteils durch einen umlaufenden Klemmkragen gebildet ist.

16. Bauteilverbindung nach Anspruch 15, **dadurch gekennzeichnet, dass** der umlaufende Klemmkragen des ersten Bauteils (2) oder der umlaufende Klemmkragen des zweiten Bauteils (3) durch eine umlaufende Schweißnaht mit dem zugeordneten kugeligen oder kugelähnlichen Element (4a, 4b) verschweißt ist.

17. Bauteilverbindung nach einem der Ansprüche 1 bis 16, **dadurch gekennzeichnet, dass** die beiden Bauteile (2, 3) im Bereich des Verbindungselements (4) miteinander verschweißt sind.

18. Verfahren zum Verbinden eines ersten, ein Durchgangsloch aufweisenden Bauteils (2) mit einem zweiten, ein Durchgangsloch aufweisenden Bauteil, mit folgenden Schritten:
- Aneinanderliegen der beiden Bauteile (2, 3), derart, dass die Durchgangslöcher einander zumindest teilweise überlappen,
- Klemmverbinden der beiden Bauteile (2, 3) durch Anbringen eines Verbindungselements (4), welches mindestens zwei kugelige oder kugelähnliche Elemente (4a, 4b) aufweist, derart, dass
- ein erstes der kugeligen oder kugelähnlichen Elemente (4a) auf einer ersten Seite (2a) des ersten Bauteils (2) aus dem Durchgangsloch des ersten Bauteils (2) herausragt und
- ein zweites der kugeligen oder kugelähnlichen Elemente (4b) auf einer der ersten Seite des ersten Bauteils abgewandten ersten Seite (3a) des zweiten Bauteils (3) aus dem Durchgangsloch des zweiten Bauteils (3) herausragt, wobei
- ein von einem Lochrand des ersten Bauteils (2) abstehendes Klemmelement (2c, 2c') klemmend von außen her an den ersten der kugeligen oder kugelähnlichen Elemente (4a) anliegt und
- ein von einem Lochrand des zweiten Bauteils (3) abstehendes Klemmelement (3c, 3c') klemmend von außen her an dem zweiten kugeligen oder kugelähnlichen Element (4b) anliegt.

19. Verfahren nach Anspruch 18, **dadurch gekennzeichnet, dass** die beiden Bauteile (2, 3) durch das Verbindungselement (4) klemmend miteinander verbunden und relativ zueinander vorfixiert und anschließend dauerhaft fest miteinander verbunden werden.

20. Verfahren nach Anspruch 18 oder 19, **dadurch gekennzeichnet, dass** die beiden Bauteile (2, 3) so aneinander gelegt werden, dass die Durchgangslöcher exzentrisch in Bezug zueinander sind.

21. Verfahren nach einem der Ansprüche 18, 19 oder 20, **dadurch gekennzeichnet, dass** die beiden Bauteile (2, 3) unmittelbar oder mittelbar über das Verbindungselement (4) miteinander verschweißt werden, insbesondere durch Laser-Schweißen.

## Claims

1. A component connection (1), with
- a first component (2) which has a through-hole, from the hole rim of which at least one clamping element (2c, 2c') protrudes towards a first side (2a) of the first component (2),
- a second component (3) which has a through-hole, from the hole rim of which at least one clamping element (3c, 3c') protrudes towards a first side (3a) of the second component (3), wherein
- the two components (2, 3) bear against each other with their sides (2b, 3b) which face away from the first sides (2a, 3a), and
- with a connecting element (4) having at least two spherical or sphere-like elements (4a, 4b) which extends through the two through-holes such that
- the at least one clamping element (2c, 2c') of the first component (2) bears against a first one of the at least two spherical or sphere-like elements (4a, 4b), and
- the at least one clamping element (3c, 3c') of the second component (3) bears in clamping manner against a second one of the at least two spherical or sphere-like elements (4a, 4b).

2. A component connection according to Claim 1, **characterised in that** the connecting element (4) has precisely two spheres (4a, 4b) connected together, or is formed by precisely two spheres (4a, 4b) connected together.

3. A component connection according to Claim 2, **characterised in that** the two spheres are connected together by a material-formed bond.

4. A component connection according to one of Claims 2 or 3, **characterised in that** the two spheres (4a, 4b) are welded together.

5. A component connection according to one of Claims 1 to 4, **characterised in that** at least one of the clamping elements (2c, 2c', 3c, 3c'), especially each clamping element (2c, 2c', 3c, 3c') of the first and/or of the second component (2, 3), from the outside bears against the connecting element (4) in a region which lies in the region between equatorial planes (5a, 5b) of the spherical or sphere-like elements (4a, 4b).

6. A component connection according to one of Claims 1 to 5, **characterised in that** a straight line which passes through mid-points of the spherical or sphere-like elements is not exactly vertical, but oblique relative to a tangential plane of the first and/or of the second component in the region of the respective through-hole.

7. A component connection according to one of Claims 1 to 6, **characterised in that** the at least one clamping element (2c, 2c') of the first component (2) and/or the at least one clamping element (3c, 3c') of the second component (3) is connected in one piece to the first or the second component (2, 3).

8. A component connection according to one of Claims 1 to 7, **characterised in that** the at least one clamping element (2c, 2c') of the first component (2) and/or the at least one clamping element (3c, 3c') of the second component is formed by a bent-over or bent-up hole rim of the first component (2) or of the second component (3).

9. A component connection according to one of Claims 1 to 8, **characterised in that** the two components (2, 3) in addition to the clamping connection are permanently connected securely together.

10. A component connection according to one of Claims 1 to 9, **characterised in that** the two components (2, 3) are welded or screwed or riveted or glued.

11. A component connection according to one of Claims 1 to 10, **characterised in that** the two components (2, 3) in addition to the clamping connection are aligned relative to each other by a positive connection (7, 8).

12. A component connection according to one of Claims 1 to 11, **characterised in that** the first component (2) has an elevation (7) and the second component an indentation into which the elevation engages in positive manner, or vice versa.

13. A component connection according to one of Claims 1 to 12, **characterised in that** the two components (2, 3) have centring holes aligned on each other, into which a centring element, especially a centring pin, is introduced.

14. A component connection according to one of Claims 1 to 13, **characterised in that** the at least one clamping element (2c, 2c') of the first component (2) is welded to the first spherical element (4a), and/or the at least one clamping element (3c, 3c') of the second component (3) is welded to the second spherical element (4b).

15. A component connection according to one of Claims 1 to 14, **characterised in that** the at least one clamping element (2c, 2c') of the first component (2) and/or the at least one clamping element (3c, 3c') of the second component is/are formed by an encircling clamping collar.

16. A component connection according to Claim 15, **characterised in that** the encircling clamping collar of the first component (2) or the encircling clamping collar of the second component (3) is welded to the associated spherical or sphere-like element (4a, 4b) by an encircling weld seam.

17. A component connection according to one of Claims 1 to 16, **characterised in that** the two components (2, 3) are welded together in the region of the connecting element (4).

18. A method for connecting a first component (2) having a through-hole to a second component having a through-hole, having the following steps:
- laying the components (2, 3) against each other such that the through-holes at least partially overlap each other,
- clamping connecting of the two components (2, 3) by attaching a connecting element (4) which has at least two spherical or sphere-like elements (4a, 4b), such that
- a first one of the spherical or sphere-like elements (4a) projects out of the through-hole of the first component (2) on a first side (2a) of the first component (2), and
- a second one of the spherical or sphere-like elements (4b) projects out of the through-hole of the second component (3) on a first side (3a) of the second component (3) which faces away from the first side of the first component, wherein
- a clamping element (2c, 2c') protruding from a hole rim of the first component (2) bears in clamping manner from the outside on the first one of the spherical or sphere-like elements (4a), and
- a clamping element (3c, 3c') protruding from a hole rim of the second component (3) bears in clamping manner from the outside against the second spherical or sphere-like element (4b).

19. A method according to Claim 18, **characterised in that** the two components (2, 3) are connected together in clamping manner by the connecting element (4) and are pre-fixed relative to each other and then permanently connected securely together.

20. A method according to Claim 18 or Claim 19, **characterised in that** the two components (2, 3) are laid against each other such that the through-holes are eccentric in relation to each other.

21. A method according to one of Claims 18, 19 or 20, **characterised in that** the two components (2, 3) are welded together directly or indirectly by way of the connecting element (4), especially by laser welding.

## Revendications

1. Assemblage de composants (1), comprenant :
- un premier composant (2), qui comporte un perçage traversant à partir du bord duquel au moins un élément de serrage (2c, 2c') s'étend vers un premier côté (2a) du premier composant (2),
- un second composant (3) qui comporte un perçage traversant à partir du bord duquel au moins un élément de serrage (3c, 3c') s'étend vers un premier côté (3a) du second composant (3), dans lequel :
- les deux composants (2, 3) s'appliquent l'un sur l'autre par leurs côtés (2b, 3b) situés à l'opposé des premiers côtés (2a, 3a), et
- un élément de liaison (4) comprenant au moins deux éléments (4a, 4b) sphériques ou sphéroïdes qui s'étend au travers des deux perçages traversant de sorte que :
- l'élément de serrage (2c, 2c') du premier composant (2) s'applique sur un premier des éléments (4a, 4b) sphériques ou sphéroïdes, et
- l'élément de serrage (3c, 3c') du second composant (3) s'applique de façon serrée sur un second des éléments sphériques ou sphéroïques (4a, 4b).

2. Assemblage de composants conforme à la revendication 1, **caractérisé en ce que**
l'élément de liaison (4) comporte précisément deux sphères (4a, 4b) liées entre elles ou est formé par précisément deux sphères (4a, 4b) liées l'une à l'autre.

3. Assemblage de composants conforme à la revendication 2, **caractérisé en ce que**
les deux sphères sont liées l'une à l'autre par une liaison par la matière.

4. Assemblage de composants conforme à l'une des revendications 2 et 3,
**caractérisé en ce que**
les deux sphères (4a, 4b) sont soudées l'une à l'autre.

5. Assemblage de composants conforme à l'une des revendications 1 à 4,
**caractérisé en ce qu'**
au moins l'un des éléments de serrage (2c, 2c', 3c, 3c'), en particulier chacun des éléments de serrage (2c, 2c', 3c, 3c') du premier composant et/ou du second composant (2, 3) s'applique par l'extérieur, sur l'élément de liaison (4), dans une zone qui est située dans la zone comprise entre les plans équatoriaux (5a, 5b) des éléments sphériques ou sphéroïdes (4a, 4b).

6. Assemblage de composants conforme à l'une des revendications 1 à 5,
**caractérisé en ce que**
la droite passant par les centres des éléments sphériques ou sphéroides n'est pas exactement verticale, mais est oblique par rapport au plan tangentiel du premier composant et/ou du second composant dans la zone du perçage traversant respectif.

7. Assemblage de composants conforme à l'une des revendications 1 à 6,
**caractérisé en ce que**
l'élément de serrage (2c, 2c') du premier composant (2) et/ou l'élément de serrage (3c, 3c') du second composant (3) est(sont) relié(s) en une seule pièce avec le premier composant ou le second composant (2, 3).

8. Assemblage de composants conforme à l'une des revendications 1 à 7,
**caractérisé en ce que**
l'élément de serrage (2c, 2c') du premier composant (2) et/ou l'élément de serrage (3c, 3c') du second composant est(sont) formé(s) par le bord replié ou recourbé du perçage du premier composant (2) ou du second composant (3).

9. Assemblage de composants conforme à l'une des revendications 1 à 6,
**caractérisé en ce que**
les deux composants (2, 3) sont en permanence reliés solidairement l'un à l'autre en permanence en plus de la liaison par serrage.

10. Assemblage de composants conforme à l'une des revendications 1 à 9,
**caractérisé en ce que**
les deux composants (2, 3) sont soudés ou vissés ou rivés ou collés.

11. Assemblage de composants conforme à l'une des revendications 1 à 10,
**caractérisé en ce que**
les deux composants (2, 3) sont orientés par une liaison par la forme (7, 8) l'un par rapport à l'autre, en plus de la liaison par serrage.

12. Assemblage de composants conforme à l'une des revendications 1 à 11,
**caractérisé en ce que**
le premier composant (2) comporte un bossage (7) et le second composant comporte un renfoncement dans lequel vient en prise le bossage par une liaison par la forme, ou inversement.

13. Assemblage de composants conforme à l'une des revendications 1 à 12,
**caractérisé en ce que**
les deux composants (2, 3) comportent des perçages de centrage orientés l'un par rapport à l'autre dans lesquels est introduit un élément de centrage, en particulier une broche de centrage.

14. Assemblage de composants conforme à l'une des revendications 1 à 13,
**caractérisé en ce que**
l'élément de serrage (2c, 2c') du premier composant (2) est soudé avec le premier élément sphérique (4a) et/ou l'élément de serrage (3c, 3c') du second composant (3) est soudé avec le second élément sphérique (4b).

15. Assemblage de composants conforme à l'une des revendications 1 à 14,
**caractérisé en ce que**
l'élément de serrage (2c, 2c') du premier composant (2) et/ou l'élément de serrage (3c, 3c') du second composant est(sont) formé(s) par une collerette de serrage périphérique.

16. Assemblage de composants conforme à la revendication 15, **caractérisé en ce que**
la collerette de serrage périphérique du premier composant (2) ou la collerette de serrage périphérique du second composant (3) est(sont) soudée(s), par un joint de soudure périphérique avec l'élément sphérique ou sphéroïde (4a, 4b) associé.

17. Assemblage de composants conforme à l'une des revendications 1 à 16,
**caractérisé en ce que**
les deux composants (2, 3) sont soudés l'un à l'autre dans la zone de l'élément de liaison (4).

18. Procédé d'assemblage d'un premier composant (2) qui comporte un perçage traversant avec un second composant qui comporte un perçage traversant comprenant les étapes suivantes consistant à :
- positionner l'un sur l'autre les deux composants (2, 3) de sorte que les perçages traversants se chevauchent au moins partiellement,
- relier les deux composants (2, 3) par serrage par mise en place d'un élément de liaison (4) qui comporte au moins deux éléments sphériques ou sphéroïdes (4a, 4b) de sorte :
- qu'un premier des éléments sphériques ou sphéroïdes (4a) dépasse du perçage traversant du premier composant (2) sur un premier côté (2a) du premier composant (2), et
- qu'un second des éléments sphériques ou sphéroïdes (4b) dépasse du perçage traversant du second composant (3) sur un premier côté (3a) du second composant (3) situé à l'opposé du premier côté du premier composant,
- un élément de serrage (2c, 2c') s'étendant à partir du bord du perçage du premier composant (2) s'appliquant de façon serrée par l'extérieur sur le premier des éléments sphériques ou sphéroïdes (4a), et
- un élément de serrage (3c, 3c') s'étendant à partir du bord du perçage du second composant (3) s'applique de façon serrée par l'extérieur sur le second élément sphérique ou sphéroïde (4b).

19. Procédé conforme à la revendication 18,
**caractérisé en ce que**
les deux composants (2, 3) sont reliés l'un à l'autre de façon serrée par l'élément de liaison (4), et sont préfixés l'un par rapport à l'autre, puis sont en permanence reliés solidairement l'un à l'autre.

20. Procédé conforme à la revendication 18 ou 19,
**caractérisé en ce que**
les deux composants (2, 3) sont appliqués l'un sur l'autre de sorte que les perçages traversants soient excentrés l'un par rapport à l'autre.

21. Procédé conforme à l'une des revendications 18, 19 ou 20, **caractérisé en ce que**
les deux composants (2, 3) sont soudés l'un à l'autre, directement ou indirectement par l'intermédiaire de l'élément de liaison (4), en particulier par soudage laser.
